# EUROPEAN PATENT SPECIFICATION

(11) **EP 3 388 290 B1**
(45) Date of publication and mention of the grant of the patent: **16.10.2019**
(21) Application number: 17166474.1
(22) Date of filing: 13.04.2017
(51) Int. Cl.: B60R 21/2346, B60R 21/232

(54) **METHOD OF MANUFACTURING AN AIRBAG PROVIDED WITH A GAS GUIDE**
VERFAHREN ZUR HERSTELLUNG EINES AIRBAGS MIT EINER GASFÜHRUNG
PROCÉDÉ DE FABRICATION D'UN COUSSIN DE SÉCURITÉ GONFLABLE POURVU D'UN GUIDE DE GAZ

(43) Date of publication of application: 17.10.2018
(73) Proprietor: Autoliv Development AB, 447 83 Vargarda (SE)
(72) Inventor: PETECKA, Magdalena, 58-500 Jelenia Góra (PL)
(74) Representative: AWA Sweden AB

(56) References cited:
- DE-A1-102008 040 007
- US-A1- 2008 238 055

## Description

### Technical Field of the Invention

The present invention relates to a method of manufacturing an airbag provided with a gas guide.

### Background Art

In most new vehicles today, safety airbags are included. Airbags of different types, such as inflatable curtains and pedestrian protection airbags, may use a textile gas guide to direct inflation gas from an airbag inflator into the airbag, in the needed directions so that it will inflate quickly. Typically, such a gas guide is sewn from two superposed layers of fabric. The sewn together gas guide is then fixed inside the airbag.

One example of an airbag provided with a textile gas guide is disclosed in US 2009/0295134.

DE 10 2008 040007 A1 discloses a method of manufacturing an airbag according to the preamble of claim1.

With respect to previously known methods, it is desired to provide a method which allows an airbag provided with a gas guide to be manufactured in a more cost and/or time efficient manner.

### Summary of the Invention

It is an object of the present invention to provide an improved method of manufacturing an airbag provided with a gas guide.

These and other objects that will be apparent from the following summary and description are achieved by a method according to the appended claims.

According to one aspect of the present disclosure there is provided a method of manufacturing an airbag provided with a gas guide, said method comprising forming a layered fabric comprising a first inflatable portion, a second inflatable portion, a gas distribution portion, having a temporary opening, and an excess portion situated between the first and the second inflatable portions, cutting said excess portion such that at least one fabric portion is formed, said at least one fabric portion being adapted to form a gas guide, inserting said at least one fabric portion through said temporary opening into said gas distribution portion, forming from said at least one fabric portion a gas guide having a gas inlet, a first gas outlet arranged to direct gas into said first inflatable portion and a second gas outlet arranged to direct gas into said second inflatable portion, and closing said temporary opening, thereby forming said airbag.

This method enables an airbag provided with a gas guide to be manufactured in a very easy and cost efficient manner, since excess fabric of the fabric blank provided to form an airbag is utilized to form a gas guide for the airbag. Furthermore, it provides for a time efficient method, since relatively few steps are required to complete the airbag and/or since the steps required to complete the airbag can be carried out in an efficient manner.

According to one embodiment said at least one fabric portion is folded into at least two layers. The fabric portion may thus be folded such that two superposed layers are formed.

According to one embodiment, when cutting said excess portion, said at least one fabric portion is partially released from a main portion of said layered fabric.

According to one embodiment, when cutting said excess portion, said at least one fabric portion is completely released from a main portion of said layered fabric.

According to one embodiment said layered fabric comprises two fabric panels and said at least one fabric portion is formed from a first one of said two fabric panels.

According to one embodiment a first fabric portion is formed from a first fabric panel of said layered fabric and a second fabric portion is formed from a second panel of said layered fabric. In this embodiment the gas guide is thus formed partly by a fabric portion of a first fabric panel and partly by a fabric portion of a second fabric panel.

According to one embodiment at least one seam is sewn to form the gas guide.

According to one embodiment said at least one seam forms a gas guide supporting seam. The gas guide may thus be fixed to the airbag by the seam. The gas guide supporting seam provides for a robust and reliable solution.

According to one embodiment said temporary opening is closed by sewing a seam. A sewn seam may thus serve to "close" the airbag so that an inflatable volume comprising several chambers is provided.

According to one embodiment said layered fabric is formed by weaving a first fabric panel in a first weaving operation, weaving a second fabric panel in a second weaving operation and interconnecting said first and second fabric panels at joints.

According to one embodiment at least one of said joints comprises a sewn seam.

According to one embodiment said layered fabric is formed by weaving in one single weaving operation, e.g. using one-piece woven technology.

According to one embodiment a first and a second panel are interconnected by interweaving threads of the first and second fabric panels while weaving the layered fabric.

These and other aspects of the invention will be apparent from and elucidated with reference to the claims and the embodiments described hereinafter.

### Brief Description of the Drawings

The invention will hereafter be described in more detail and with reference to the appended schematic drawings.
Figure 1 is a perspective view and illustrates a layered fabric configured to form an airbag and a gas guide for the airbag.
Figure 2 is a perspective view and illustrates the layered fabric shown in Figure 1 provided with a cut pattern.
Figure 3 is a perspective view and illustrates the layered fabric shown in Figure 1 with a fabric portion partly cut out from an excess area.
Figure 4 is a perspective view and illustrates the partly cut out fabric portion shown in Figure 3 partly inserted into a gas distribution portion of the layered fabric.
Figure 5 is a perspective view and illustrates an airbag provided with a gas guide.

### Detailed Description of Preferred Embodiments of the Invention

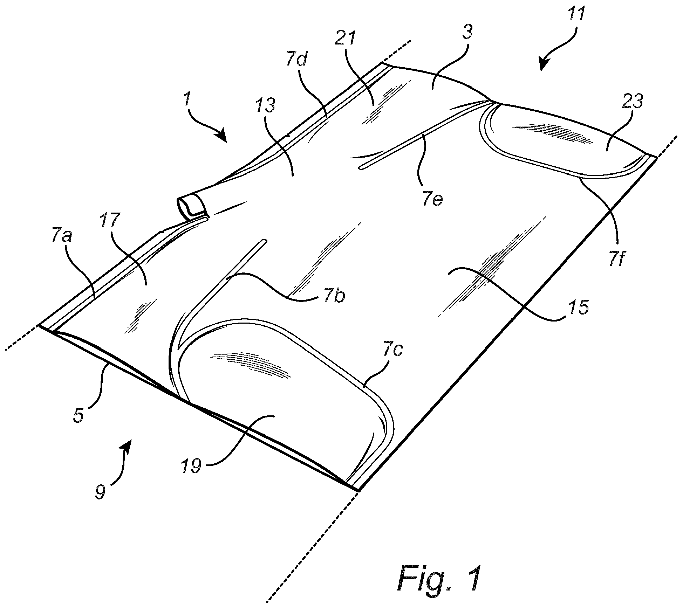

In figure 1 a central part of a layered fabric 1 is shown. The layered fabric 1 is adapted to form a side impact protection airbag and a gas guide configured to be fitted inside the airbag. The layered fabric 1 comprises two fabric panels 3, 5 interconnected along joints 7a, 7b, 7c, 7d, 7e, 7f, which may be formed by sewn seams or by interwoven joints, defining a first inflatable portion 9, a second inflatable portion 11, a gas distribution portion 13 and an excess portion 15 situated between the first and the second inflatable portions 9, 11.

The first inflatable portion 9 comprises a first inlet chamber 17 and several chambers, one 19 of which is illustrated in Fig. 1 and the second inflatable portion 11 comprises a second gas inlet chamber 21 and several chambers, one 23 of which is illustrated in Fig. 1. The gas distribution portion 13 is configured to accommodate a gas guide for guiding gas received by an airbag inflator to each of the first and the second inflatable portions 9, 11. Each of the first and the second inlet chambers 17, 21 is thus fluidly connected to the gas distribution portion 13.

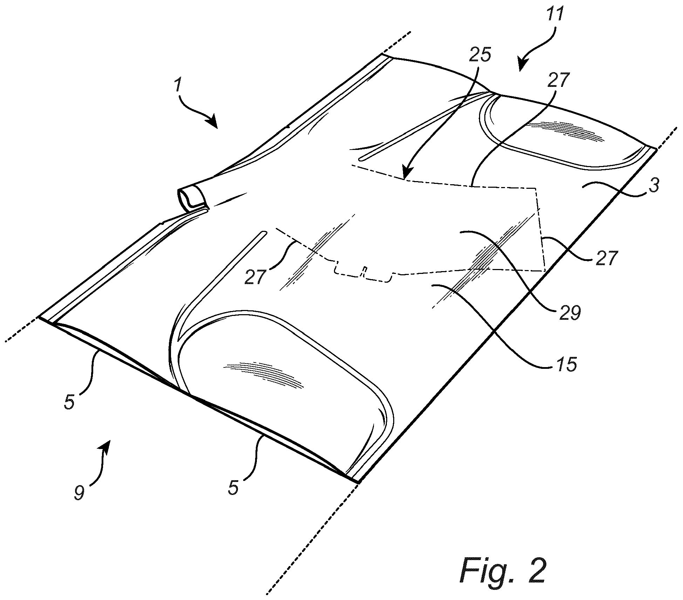

Fig. 2 illustrates a cut pattern 25, which comprises several cutting lines 27, that has been marked in the excess area 15 on a first one 3 of the fabric panels 3, 5 of the layered fabric 1. By cutting along the cutting lines 27 of the cut pattern 25 a fabric portion 29 configured to form a gas guide may be provided.

With reference to Figs. 1-5, a method of manufacturing an airbag provided with a gas guide according to the present disclosure will now be described.

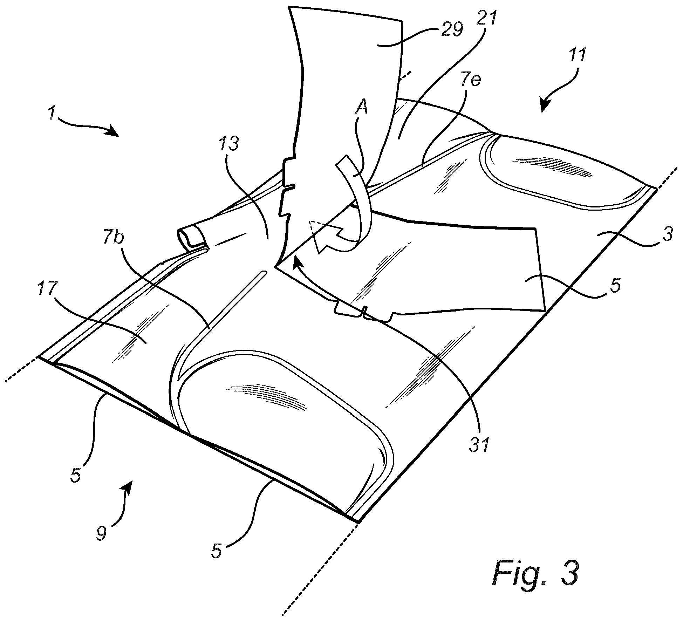

Firstly, a fabric, in the form of a layered fabric 1, comprising a first inflatable portion 9, a second inflatable portion 11, a gas distribution portion 13 and an excess portion 15 is formed. The gas distribution portion 13 is situated between the inlet chamber 17 of the first inflatable portion 9 and the inlet chamber 21 of the second inflatable portion 11 and fluidly connects the first and the second inflatable portions 9, 11 to each other. The gas distribution portion 13 has a temporary opening 31, as best illustrated in Fig. 3. The temporary opening 31 extends between one 7b of the joints defining the first inflatable portion 9 and one 7e of the joints defining the second inflatable portion 11.

The layered fabric 1 may be formed by first weaving two separate fabric panels 3, 5 and then interconnecting the two fabric panels 3, 5 along joints 7a, 7b, 7c, 7d, 7e. The fabric panels 3, 5 may be interconnected by sewing. Then, sewn seams form the joints along which the fabric panels 3, 5 are interconnected.

Alternatively, the layered fabric 1 may be formed in one single weaving operation, e.g. using one-piece woven technology. Then, joints, in the form of intervowen joints, along which the fabric panels 3, 5 are interconnected are formed by interweaving threads of the two fabric panels 3, 5 while weaving the layered fabric.

After forming the layered fabric 1 a cut pattern 25, illustrated in Fig. 2, is marked, in the excess portion 15, on a first one 3 of the two fabric panels 3, 5. The cut pattern 25 comprises cutting lines 27 which indicate where to cut in order to form a fabric portion 29 to be used to form a gas guide from the first fabric panel 3.

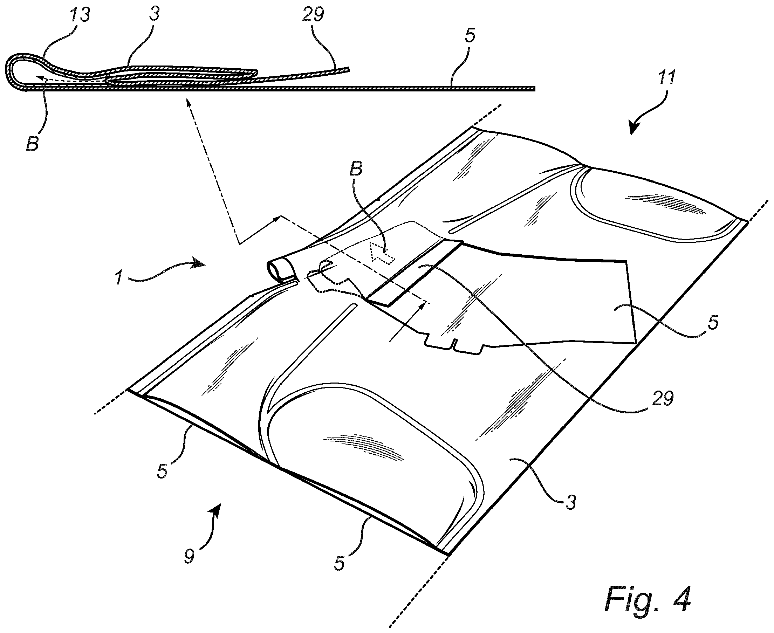

After the cut pattern 25 has been marked out the first fabric panel 3 is cut such that a fabric portion 29 being adapted to form a gas guide is formed. Then, the partly cut out fabric portion 29 is inserted through the temporary opening 31 into the gas distribution portion 13, as illustrated by arrows A and B in Fig. 3 and Fig. 4, respectively. The fabric portion 29 is inserted to a position between the two fabric panels 3, 5.

Fig. 4 illustrates a state in which the fabric portion 29 has been inserted slightly more than halfway into the gas distribution portion 13.

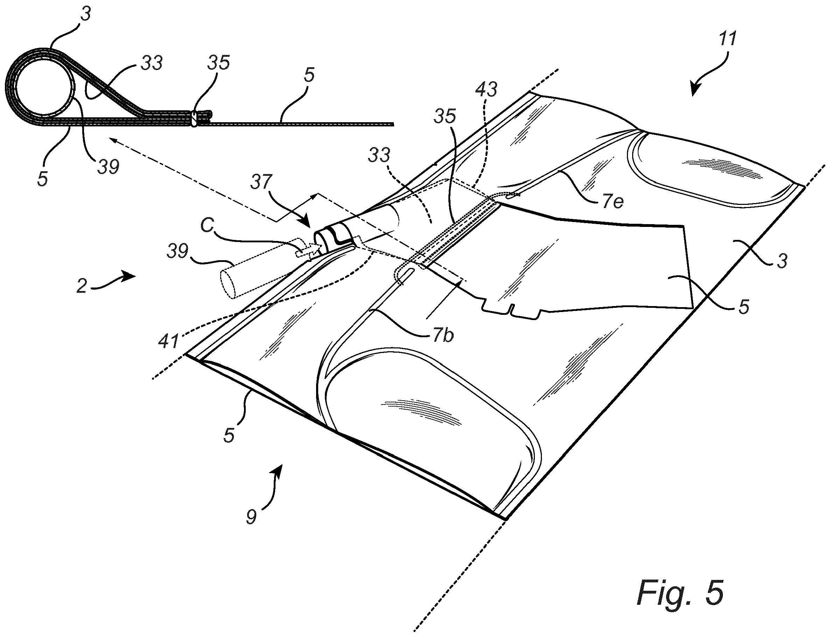

When the fabric portion 29 is fully inserted into the gas distribution portion 13, as illustrated in Fig. 5, a gas guide 33 is formed and the temporary opening 31 is closed by sewing a seam 35. The seam 35 extends between one 7b of the joints defining the first inflatable portion 9 and one 7e of the joints defining the second inflatable portion 11. The sewn seam 35 serves to "close" the airbag 2 such that an inflatable volume comprising several chambers is provided. Hence, the seam 35 connects one 7b of the joints defining the first inflatable portion 9 and one 7e of the joints defining the second inflatable portion 11 to each other. Furthermore, the sewn seam 35 secures the gas guide 33 to the airbag 2 and serves to maintain the gas guide 33 properly positioned upon inflation of the airbag 2. The seam 35 thus forms a gas guide supporting seam. The formed gas guide 33 has a gas inlet 37, a first gas outlet 41 arranged to direct gas into the first inflatable portion 9 and a second gas outlet 43 arranged to direct gas into said second inflatable portion 11.

The gas inlet 37 is arranged to receive an airbag inflator 39. An airbag inflator 39 may be inserted into the gas inlet 37 of the gas guide 33, as illustrated by arrow C in Fig. 5.

Hereinbefore it has been described that a gas guide may be entirely formed from a fabric portion formed from one single fabric panel. It is appreciated that a gas guide may be formed partly from a fabric portion from a first fabric panel and partly from a fabric portion from a second fabric panel.

## Claims

1. Method of manufacturing an airbag (2) provided with a gas guide (33), said method comprising:
forming a layered fabric (1) comprising a first inflatable portion (9), a second inflatable portion (11), a gas distribution portion (13), having a temporary opening (31), and an excess portion (15) situated between the first and the second inflatable portions (9, 11),
cutting said excess portion (15) such that at least one fabric portion (29) is formed, said at least one fabric portion (29) being adapted to form a gas guide (33)
**characterized by**
inserting said at least one fabric portion (29) through said temporary opening (31) into said gas distribution portion (13),
forming from said at least one fabric portion (29) a gas guide (33) having a gas inlet (37), a first gas outlet (41) arranged to direct gas into said first inflatable portion (9) and a second gas outlet (43) arranged to direct gas into said second inflatable portion (11), and
closing said temporary opening (31), thereby forming said airbag (2).

2. A method according to claim 1, wherein said at least one fabric portion (29) is folded into at least two layers.

3. A method according to any one of the preceding claims, wherein, when cutting said excess portion (15), said at least one fabric portion (29) is partially released from a main portion of said layered fabric (1).

4. A method according to any of claims 1-2, wherein, when cutting said excess portion (15), said at least one fabric portion (29) is completely released from a main portion of said layered fabric (1).

5. A method according to any one of the preceding claims, wherein said layered fabric (1) comprises two fabric panels (3, 5) and said at least one fabric portion (29) is formed from a first one (3) of said two fabric panels (3, 5).

6. A method according to any one of the claims 1-4, wherein a first fabric portion (29) is formed from a first fabric panel (3) of said layered fabric (1) and a second fabric portion is formed from a second panel (5) of said layered fabric (1).

7. A method according to any one of the preceding claims, wherein at least one seam (35) is sewn to form the gas guide (33).

8. A method according to claim 7, wherein said at least one seam (35) forms a gas guide supporting seam.

9. A method according to any one of the preceding claims, wherein said temporary opening (31) is closed by sewing a seam (35).

10. Method according to any one of the preceding claims, wherein said layered fabric (1) is formed by weaving a first fabric panel (3) in a first weaving operation, weaving a second fabric panel (5) in a second weaving operation and interconnecting said first and second fabric panels (3, 5) at joints (7a, 7b, 7c, 7d, 7e, 7f).

11. Method according to claim 10, wherein at least one of said joints (7a, 7b, 7c, 7d, 7e, 7f) comprises a sewn seam.

12. Method according to any one of the claims 1-9, wherein said layered fabric (1) is formed by weaving in one single weaving operation.

13. Method according to claim 12, wherein a first (3) and a second (5) panel are interconnected by interweaving threads of the first and the second fabric panels (3, 5) while weaving the layered fabric (1).

## Patentansprüche

1. Verfahren zur Herstellung eines Airbags (2) mit einer Gasführung (33), wobei das Verfahren umfasst:
Bilden eines geschichteten Stoffs (1), umfassend einen ersten aufblasbaren Abschnitt (9), einen zweiten aufblasbaren Abschnitt (11), einen Gasverteilungsabschnitt (13), der eine temporäre Öffnung (31) aufweist, und einen Überschussabschnitt (15), der zwischen dem ersten und dem zweiten aufblasbaren Abschnitt (9, 11) angeordnet ist,
Schneiden des Überschussabschnitts (15), so dass mindestens ein Stoffabschnitt (29) gebildet wird, wobei der mindestens eine Stoffabschnitt dafür geeignet ist, eine Gasführung (33) zu bilden,
**gekennzeichnet durch**
Einführen des mindestens einen Stoffabschnitts (29) durch die temporäre Öffnung (31) in den Gasverteilungsabschnitt (13),
Bilden einer Gasführung (33), aufweisend einen Gaseinlass (37), einen ersten Gasauslass (41), der dafür eingerichtet ist, Gas in den ersten aufblasbaren Abschnitt (9) zu leiten, und einen zweiten Gasauslass (43), der dafür eingerichtet ist, Gas in den zweiten aufblasbaren Abschnitt (11) zu leiten, aus dem mindestens einen Stoffabschnitt (29), und
Schließen der temporären Öffnung (31), wodurch der Airbag (2) gebildet wird.

2. Verfahren nach Anspruch 1, wobei der mindestens eine Stoffabschnitt (29) in mindestens zwei Schichten gefaltet ist.

3. Verfahren nach einem der vorhergehenden Ansprüche, wobei, wenn der Überschussabschnitt (15) geschnitten wird, der mindestens eine Stoffabschnitt (29) teilweise von einem Hauptabschnitt des geschichteten Stoffs (1) gelöst wird.

4. Verfahren nach einem der Ansprüche 1 bis 2, wobei, wenn der überschüssige Abschnitt (15) geschnitten wird, der mindestens eine Stoffabschnitt (29) vollständig von einem Hauptabschnitt des geschichteten Stoffs (1) gelöst wird.

5. Verfahren nach einem der vorhergehenden Ansprüche, wobei der geschichtete Stoff (1) zwei Stoffbahnen (3, 5) umfasst und der mindestens eine Stoffabschnitt (29) aus einer ersten (3) der zwei Stoffbahnen (3, 5) gebildet wird.

6. Verfahren nach einem der Ansprüche 1 bis 4, wobei ein erster Stoffabschnitt (29) aus einer ersten Stoffbahn (3) des geschichteten Stoffs (1) gebildet wird und ein zweiter Stoffabschnitt aus einer zweiten Bahn (5) des geschichteten Stoffs (1) gebildet wird.

7. Verfahren nach einem der vorhergehenden Ansprüche, wobei mindestens eine Naht (35) genäht wird, um die Gasführung (33) zu bilden.

8. Verfahren nach Anspruch 7, wobei die mindestens eine Naht (35) eine die Gasführung haltende Naht bildet.

9. Verfahren nach einem der vorhergehenden Ansprüche, wobei die temporäre Öffnung (31) durch Nähen einer Naht (35) geschlossen wird.

10. Verfahren nach einem der vorhergehenden Ansprüche, wobei der geschichtete Stoff (1) durch Weben einer ersten Stoffbahn (3) in einem ersten Webvorgang, Weben einer zweiten Stoffbahn (5) in einem zweiten Webvorgang und Verbinden der ersten und zweiten Stoffbahn (3, 5) an Verbindungen (7a, 7b, 7c, 7d, 7e, 7f) gebildet wird.

11. Verfahren nach Anspruch 10, wobei mindestens eine der Verbindungen (7a, 7b, 7c, 7d, 7e, 7f) eine genähte Naht umfasst.

12. Verfahren nach einem der Ansprüche 1 bis 9, wobei der geschichtete Stoff (1) durch Weben in einem einzigen Webvorgang gebildet wird.

13. Verfahren nach Anspruch 12, wobei eine erste (3) und eine zweite (5) Bahn durch Verweben von Fäden der ersten und zweiten Stoffbahn (3, 5) verbunden werden, während der geschichtete Stoff (1) gewebt wird.

## Revendications

1. Procédé de fabrication d'un coussin gonflable de sécurité (2) pourvu d'un guide de gaz (33), ledit procédé comprenant :
la formation d'un tissu multicouche (1) comprenant une première partie gonflable (9), une deuxième partie gonflable (11), une partie de distribution de gaz (13) présentant une ouverture temporaire (31), et une partie excédentaire (15) située entre les première et deuxième parties gonflables (9, 11),
la découpe de ladite partie excédentaire (15) de manière à former au moins une partie de tissu (29), ladite au moins une partie de tissu (29) étant apte à former un guide de gaz (33),
**caractérisé par**
l'introduction de ladite au moins une partie de tissu (29), par ladite ouverture temporaire (31), dans ladite partie de distribution de gaz (13),
la formation, à partir de ladite au moins une partie de tissu (29), d'un guide de gaz (33) présentant une entrée de gaz (37), une première sortie de gaz (41) agencée pour diriger du gaz dans ladite première partie gonflable (9) et une deuxième sortie de gaz (43) agencée pour diriger du gaz dans ladite deuxième partie gonflable (11), et
la fermeture de ladite ouverture temporaire (31), en formant ainsi ledit coussin gonflable de sécurité (2).

2. Procédé selon la revendication 1, dans lequel ladite au moins une partie de tissu (29) est pliée en au moins deux couches.

3. Procédé selon l'une quelconque des revendications précédentes, dans lequel, lors de la découpe de ladite partie excédentaire (15), ladite au moins une partie de tissu (29) est partiellement dégagée d'une partie principale dudit tissu multicouche (1).

4. Procédé selon l'une quelconque des revendications 1 et 2, dans lequel, lors de la découpe de ladite partie excédentaire (15), ladite au moins une partie de tissu (29) est complètement dégagée d'une partie principale dudit tissu multicouche (1).

5. Procédé selon l'une quelconque des revendications précédentes, dans lequel ledit tissu multicouche (1) comprend deux pans de tissu (3, 5) et ladite au moins une partie de tissu (29) est formée à partir d'un premier (3) desdits deux pans de tissu (3, 5).

6. Procédé selon l'une quelconque des revendications 1 à 4, dans lequel une première partie de tissu (29) est formée à partir d'un premier pan de tissu (3) dudit tissu multicouche (1) et une deuxième partie de tissu est formée à partir d'un deuxième pan (5) dudit tissu multicouche (1).

7. Procédé selon l'une quelconque des revendications précédentes, dans lequel au moins une couture (35) est réalisée pour former le guide de gaz (33).

8. Procédé selon la revendication 7, dans lequel ladite au moins une couture (35) forme une couture de support de guide de gaz.

9. Procédé selon l'une quelconque des revendications précédentes, dans lequel ladite ouverture temporaire (31) est fermée par une couture (35).

10. Procédé selon l'une quelconque des revendications précédentes, dans lequel ledit tissu multicouche (1) est formé par tissage d'un premier pan de tissu (3) dans une première opération de tissage, par tissage d'un deuxième pan de tissu (5) dans une deuxième opération de tissage et par liaison desdits premier et deuxième pans de tissu (3, 5) au niveau de jointures (7a, 7b, 7c, 7d, 7e, 7f).

11. Procédé selon la revendication 10, dans lequel au moins une desdites jointures (7a, 7b, 7c, 7d, 7e, 7f) comprend une couture.

12. Procédé selon l'une quelconque des revendications 1 à 9, dans lequel ledit tissu multicouche (1) est formé par tissage en une seule opération de tissage.

13. Procédé selon la revendication 12, dans lequel un premier (3) et un deuxième (5) pan sont reliés par entrelacement de fils du premier et du deuxième pan de tissu (3, 5) au cours du tissage du tissu multicouche (1).
